# EUROPÄISCHE PATENTSCHRIFT

(11) **EP 2 441 982 B1**
(45) Veröffentlichungstag und Bekanntmachung des Hinweises auf die Patenterteilung: **05.06.2013**
(21) Anmeldenummer: 11172517.2
(22) Anmeldetag: 04.07.2011
(51) Int. Cl.: F16H 57/08

(54) **Planetentrieb mit einem ersten Satz Planetenräder und mit einem zweiten Satz Planetenräder und eine Baueinheit in einem derartigen Planetentrieb**
Planetary gear with a first set of planet wheels and a second set of planet wheels and a component in such a planetary gear
Train épicycloïdal doté d'un premier ensemble de roues épicycloïdales et d'un deuxième ensemble de roues épicycloïdales, ainsi qu'une unité de construction dans un tel train épicycloïdal

(30) Priorität: 18.10.2010 DE 102010048824
(43) Veröffentlichungstag der Anmeldung: 18.04.2012
(73) Patentinhaber: Schaeffler Technologies AG & Co. KG, 91074 Herzogenaurach (DE)
(72) Erfinder: Smetana, Tomas, 91074 Herzogenaurach (DE); Wiesinger, Fritz, 91560 Heilsbronn (DE)

(56) Entgegenhaltungen:
- DE-A1- 4 009 968
- FR-A1- 2 644 859
- FR-A1- 2 652 137
- JP-U- H0 165 445
- JP-U- H0 522 928

## Beschreibung

### Gebiet der Erfindung

Die Erfindung betrifft einen Planetentrieb wenigstens mit einem ersten Satz Planetenräder, mit einem zweiten Satz Planetenräder, mit mindestens einem für beide Planetensätze gemeinsamen Planetenträger und mit einem Hohlrad, wobei paarweise jeweils ein Planetenrad des ersten Satzes und ein Planetenrad des zweiten Satzes miteinander im Zahneingriff stehen. Weiterhin betrifft die Erfindung eine separat zum Planetenträger vormontierte Baueinheit aus wenigstens der Lagerplatte und einem Paar Planetenräder.

### Hintergrund der Erfindung

Die JP1-6544 U wird als nächstligender Stand der Technik angesechen.

Ein derartiger Planetentrieb ist in DE 40 29 373 C2 näher beschrieben. Derartige Planetentriebe werden beispielsweise in Planetengetrieben eingesetzt, in denen die Planetenräder eines ersten Satzes mit der Innenverzahnung eines Hohlrades und die Planetenräder eines zweiten Satzes mit einem Sonnenrad im Zahneingriff stehen. Jeweils ein Planetenrad des ersten Satzes steht mit einem Planetenrad des zweiten Satzes im Zahneingriff und bildet ein Paar. Von den Paaren sind in gattungsgemäßen Planetengetrieben in der Regel drei oder mehr Paare am Umfang des Sonnenrades verteilt angeordnet. Im Gegensatz zu einfachen Planetengetrieben, in denen ein einziger Satz Planetenräder zugleich mit einem Sonnenrad und mit einem Hohlrad im Zahneingriff steht, weist also der Planetentrieb der betrachteten Gattung eine weitere Planetenstufe auf.

Die miteinander im Zahneingriff stehenden Planetenräder der Planetensätze des gattungsgemäßen Planetengetriebes weisen vorzugsweise die gleichen Abmessungen und gleiche Geometrien ihrer Verzahnungen auf, so dass sich zwischen jedem im Zahneingriff stehenden Paar Planetenräder in der zusätzlichen Planetenstufe eine Übersetzung von i = 1 ergibt. Möglich sind jedoch auch andere Übersetzungen und damit Zähnezahlen.

Die Drehzahlen jedes der miteinander im Zahneingriff stehenden Planetenräder eines Paares mit i = 1 sind bei Betrieb des Planetengetriebes untereinander gleich groß. Ihr Wert entspricht in dem Fall nur der Hälfte der Drehzahlen der Planetenräder des erwähnten einfachen Planetentriebs von gleicher Baugröße. Die gleiche Baugröße setzt für das gattungsgemäße Getriebe voraus, dass zumindest die Verzahnungsdaten des Hohlrades und die der Verzahnung der Planetenräder, welche mit dem Hohlrad im Zahnengriff stehen, mit denen der einfachen Planetengetriebe so übereinstimmen, dass gleiche Übersetzungsverhältnisse zwischen dem jeweiligen Hohlrad und den Planetenrädern vorherrschen.

Die gattungsgemäßen Planetentriebe werden deshalb häufig in Koppelgetrieben anstelle von mehreren gekoppelten einfachen Planetentrieben eingesetzt, weil sie statt derer axial kurz bauen und weil die Drehzahlen der Planetenräder und damit die Drehzahlen in den Lagerungen der Planetenräder reduziert werden können.

Darüber hinaus sind die gattungsgemäßen Planetengetriebe in sogenannten Reduziergetrieben mit Ravigneaux-Sätzen vorgesehen, mit denen ebenfalls mehrere gekoppelte einfache Planetentriebe abgelöst werden können. Ravigneaux-Sätze bauen axial kurz. Mit ihnen können durch Feststellen oder Abbremsen der Wellen des Planetengetriebes verschieden Betriebszustände geschaltet werden. Der klassische Ravigneaux-Satz weist zwei unterschiedlich große Sonnenräder auf. Die ersten Planetenräder eines ersten Planetensatzes sind sogenannte lange Planetenräder, die mit der Innenverzahnung eines Hohlrades, mit dem großen der Sonnenräder und mit Planetenrädern eines zweiten Planetensatzes im Zahneingriff stehen. Planetenräder des zweiten Planetensatzes stehen mit dem kleineren der Sonnenräder und zugleich mit den Planetenrädern des ersten Planetensatzes im Zahneingriff. Da jeweils ein Planetenrad des ersten Planetensatzes mit einem Planetenrad des zweiten Planetensatzes im Zahneingriff steht und ein Paar bildet, sind auch diese Planetentriebe bzw. Planetengetriebe der betrachteten Gattung zugeordnet und der gleichen Problematik unterworfen.

Der Aufwand für die Montage derartiger Planetentriebe ist nicht unerheblich, da die Anzahl an Einzelteilen relativ hoch ist und da Einzelteile, wie Planetenträger, Planetenbolzen, Planetenräder und deren Lagerungen sowie Anlaufscheiben passgenau zu einer Baueinheit zusammengesetzt werden müssen. Darüber hinaus sind die Hersteller von Getrieben im Zusammenhang mit Energieeinsparungen bemüht, die Getriebe so kompakt und leicht wie möglich zu gestalten. Ein sogenanntes Leichtbaudifferenzial mit einem Planetentrieb der gattungsbildenden Art ist in DE 10 2009 032 286 A1 beschrieben. Diese Planetentriebe sind in einem zweiteiligen Gehäuse aus Blech platzsparend untergebracht. Diese Anordnungen sind aufgrund ihrer schmalen Bauweise besonders für elektrische Antriebseinheiten in Hybridfahrzeugen oder in elektrisch betriebenen Fahrzeugen geeignet. Die leichte Bauweise, dass heißt die Gestaltung des Differenzialgehäuses aus relativ dünnem Blech, kann sich unter Umständen nachteilig auf die Steifigkeit dieser Konstruktionen und damit auf die Genauigkeit des Zahneingriffs auswirken.

Gehäuse von Getrieben werden zr Verringerung des Gewichts oft aus Leichtmetalllegierungen hergestellt. Derartige Anordnungen setzen sich in Planetengetrieben der gattungsbildenden Art aufgrund des höheren Wärmeausdehnungskoeffizienten des Leichtmetallgehäuses gegenüber den Planetenrädern-, Bolzen und deren Lagerungen aus Stahl nur bedingt durch, da aufgrund der unterschiedlichen Wärmedehnungen der Bauteile im Fahrbetrieb die Qualität des Zahneingriffs nicht immer gewährleistet werden kann.

### Beschreibung der Erfindung

Die Aufgabe der Erfindung ist es daher, Planetenlagerungen für gattungsgemäße Planetentriebe, insbesondere für Planetentriebe in unabhängigen elektromotorisch betriebenen Antriebseinheiten für Kraftfahrzeuge, zu schaffen, die den besonders hohen Anforderungen bei hohen Drehzahlen der Planetenräder gewachsen sind.

Die Aufgabe ist nach dem Gegenstand des Anspruchs 1 gelöst.

Der Planetentrieb weist wenigstens zwei Sätze Planetenräder auf. Jedem Planetenrad des einen Satzes ist jeweils ein Planetenrad des anderen Satzes so zugeordnet, dass diese Planetenräder ein miteinander im Zahneingriff befindliches Paar bilden. Mindestens ein Paar, vorzugsweise aber alle Paare der miteinander im Zahneingriff stehenden Zahnräder des ersten und zweiten Satzes, sind um eine axial ausgerichtete Rotationsachse als Paar oder zusammen mit einem oder mehreren weiteren Paar(en) relativ zu dem Planetenträger und zu einer Lagerplatte drehbar jeweils an einer zu dem Planetenträger separaten Lagerplatte gehalten. Die mit dem jeweiligen Paar, mit den Planetenbolzen und den Lagerungen sowie Anlaufscheiben zu einer Baueinheit vormontierte Lagerplatte ist zumindest umfangsgerichtet um die Zentralachse relativ unbeweglich an dem Planetenträger gehalten. Dabei kann die Lagerplatte formschlüssig an dem jeweiligen Planetenträger so verankert sein, dass diese Baueinheit um eine Rotationsachse des Planetenträgers drehfest mit dem Planetenträger vereinigt ist. Die Baueinheit ist mit dem Planetenträger verclipst oder in diesen eingesteckt oder in eine entsprechende Aufnahme des Planetenträgers zumindest so eingelegt und dabei vorzugsweise mit dem Planetenträger verschraubt oder vernietet.

Die Erfindung betrifft auch Baueinheiten aus einem Paar der Planetenräder. Die Planetenräder eines Paares sind mit wenigstens einer Lagerplatte, vorzugsweise in einem Gehäuse aus zwei Lagerplatten, aus den Planetenzapfen bzw. Planetenbolzen, aus den Planeten- bzw. Bolzenlagerungen und aus den Anlaufscheiben als Baueinheit/Modul vormontiert. Derartige Einheiten lassen sich innerhalb eines Planetentriebs aber auch in einem Planetengetriebe mit mehreren der Planetentriebe nach dem Baukastensystem verwenden. Bei der Endmontage werden dann lediglich die Sonnenräder, die Hohlräder und die Baueinheiten zu dem Modul zusammengeführt und montiert, wobei das Gehäuse dieser Einheit beispielsweise durch einen zweiteiligen Planetenträger bzw. durch eine Kombination des Hohlrades mit dem Planetenträger gebildet ist.

Die Erfindung betrifft demzufolge auch Planetentriebe, Getriebe mit derartigen Planetentrieben und Differenziale, die als Ravigneaux-Sätze ausgeführt sind. Die Erfindung betrifft außerdem eine Antriebseinheit mit wenigstens einem Elektromotor und einem Differenzial, in dem wenigstens ein Planetentrieb gemäß Erfindung zwischen dem Elektromotor und dem Differenzial angeordnet ist, wobei der Elektromotor und das Differenzial über den Planetentrieb miteinander wirkverbunden sind.

Die Erfindung weist mehrere Vorteile auf. Einerseits sind die Bauteile des Planetentriebs nach dem Baukastenprinzip zusammensetzbar. Dabei können beliebig viele Planetensätze einfach montiert werden. Der hohe Aufwand für die Montage, Lagerung und Transport einzelner Bauteile entfällt. Die Kosten für die Herstellung der Planetentriebe sind gering. Andererseits sind Baueinheiten/Module in sich relativ steife Einheiten, mit denen der gesamte Planetentrieb verwindungssteif gestaltet werden kann. Dies ist insbesondere bei der Anwendung derartiger Module in den anfangs beschriebenen Leichtbaudifferenzialen mit Gehäusen aus Blech von Bedeutung. Darüber hinaus, ist die Anwendung derartiger Module in Planetenträgern aus Leichmetalllegierungen von Vorteil, so dass die der Zahneingriff der Planetenpaare unbeeinflusst von Auswirkungen unterschiedlicher Wärmedehnung ist. In diesem Fall ist vorausgesetzt, dass die Lagerplatten wie die Wälzlager, Planetenbolzen und Planetenräder aus Stahl sind und somit gleiche Wärmeausdehnungskoeffizienten aufweisen. Außerdem ist der Sitz der Wälzlager in einer Lagerplatte aus Stahl in diesem Fall sicherer als in einem Planetenträger aus Leichtmetall.

Eine Ausgestaltung der Erfindung sieht vor, das das jeweilige zur Baueinheit vormontierte das Paar Planetenräder separat zu dem Planetenträger axial, links und rechts von einer Lagerplatte eingefasst, zwischen zwei der Lagerplatten um die eigene Rotationsachse drehbar gelagert und im Zahneingriff zueinander gehalten ist. Diese beiden Lagerplatten bilden vorzugsweise ein Gehäuse, und sind deshalb beispielsweise schalenförmig gestaltet und mit der anderen Lagerplatte verbunden. Dabei steht die Verzahnung soweit aus dem Gehäuse heraus, dass zumindest ein Teil einer Verzahnung des ersten Planetenrades und ein Teil einer Verzahnung des zweiten Planetenrades von außen soweit frei zugänglich sind, dass sichere Zahneingriffe mit Hohlrädern und Sonnenrädern abgesichert sind.

Ausgestaltungen der Erfindung sehen vor, dass die Planetenräder mit Zapfen in der Lagerplatte drehbar gelagert sind. Ein Planetenrad weist entweder einen oder zwei als Wellenzapfen ausgebildete Zapfen auf. Der jeweilige Wellenzapfen ist entweder einmaterialig mit dem Planetenrad ausgebildet oder an diesem befestigt.

Alternativ sind die Zapfen zu dem Planetenrad separate Planetenbolzen, auf denen jeweils mindestens ein Planetenrad eines Paares drehbar gelagert ist.

Eine Ausgestaltung der Erfindung sieht vor, dass der Planetenbolzen beidseitig und vorzugsweise beidseitig mit jeweils mindestens einem Wälzlager gelagert ist. Die Planetenräder sind auf dem Planetenbolzen ebenfalls mittels wenigstens eines Wälzlagers gelagert. Eine Ausgestaltung der Erfindung sieht vor, dass der Lagertyp, mit dem das Planetenrad auf dem jeweiligen Planetenbolzen gelagert ist, ein anderer Lagertyp ist, als derjenige eines anderen Wälzlagers, mit dem derjenige Planetenbolzen in der Lagerplatte gelagert ist. Wälzlager sind ein- oder mehrreihige Lager mit Kugeln, Rollen oder Nadeln bzw. aus einer Mischung von Kugeln und Rollen. Mehrreihig heißt, dass wenigsten zwei Reihen Wälzkörper des jeweiligen Wälzlagers radial konzentrisch zueinander und/oder wenigstens zwei Reihen Wälzkörper in axialer Richtung nebeneinander um die gleiche Rotationsachse angeordnet sind. Nadeln sind Rollen mit einem Verhältnis von Rollenlänge zum Durchmesser der Rolle > 2,5. Verschiedenen Lagertypen sind dementsprechend Kugellager, Rollen- oder Nadellager bzw. Mischformen der vorgenannten Lagertypen. Verschiedenen Lagertypen können auch durch unterschiedliche Anzahlen an Wälzkörpern oder durch unterschiedliche Anzahlen an Reihen gleicher Wälzkörper definiert sein.

Die Erfindung ist insbesondere für den Einsatz elektrische Antriebseinheiten geeignet, da Elektromotoren selbst hohe Antriebsdrehzahlen aufweisen. Es sind deshalb je nach Ausführung des Getriebes in den einzelnen Planetenlagerungen des Planetentriebs hohe Drehzahlen zu erwarten, die mittels der Erfindung bis auf die Hälfte der Drehzahlen eines gattungsbildenden und bis auf ein Viertel des einfachen Planetentriebs gleicher Baugröße reduziert werden.

Der Vorteil dieser Ausgestaltung der Erfindung liegt in der Verbesserung des Wirkungsgrades der Planetenlagerungen und damit des Planetentriebs. Der Aufwand für die Schmierung der einzelnen Lagerstellen kann reduziert werden, da die Drehzahlen in den einzelnen Wälzlagern geringer werden. Im Betrieb des Planetentriebs wird der Planetenbolzen aufgrund der Lagerung mit Wälzlagern im Planetenträger mitrotieren. Dadurch viertelt sich die Relativdrehzahl in den Planetenlagerungen gegenüber einem einfachen Planetentrieb des Standes der Technik und halbiert sich etwa noch einmal gegenüber dem gattungsgemäßen Stand der Technik. Die Grenzdrehzahlen der Lagerstellen werden reduziert und damit die Drehzahlkennwerte niedriger. Eine derartige Anordnung ermöglicht es, neue kurz bauende Getriebekonzepte in Antriebseinheiten mit hohen Drehzahlen zu verwirklichen, die aufgrund bisheriger Drehzahlgrenzen für Planetenlagerungen noch nicht möglich waren.

In Lagerungen für Planetenräder mit hohen Belastungen und relativ niedrigen Drehzahlen werden häufig sogenannte Vollrollensätze eingesetzt. Vollrollensätze sind Wälzlager, in denen die Rollen ohne Abstandshalter in Umfangsrichtung aneinander gereiht sind. Derartige Wälzlagerungen sind kostengünstig herzustellen, da für diese nur die Anzahl an Wälzkörpern und eine Verpackung benötigt wird. Diese Lagerungen sind jedoch für den Einsatz bei hohen Drehzahlen nicht geeignet, da die Wälzkörper aufeinander prallen und extrem aneinander reiben und somit vorzeitig verschleißen würden. Außerdem erhitzen sich die Lagerungen bei hohen Drehzahlen unzulässig. Dadurch, dass in den Planetenlagerungen der erfindungsgemäßen Planetentriebe gegenüber den gattungsgemäßen Planetentrieben des Standes der Technik im Vergleich zu einfachen Planetentrieben die Drehzahlen noch einmal in etwa halbiert sind, wird der Einsatz von Vollrollensätzen in erfindungsgemäßen Planetentrieben wieder möglich. Diese können dann in Planetenlagerungen eingesetzt werden, von denen hohe Tragzahlen gefordert werden, weil diese Planetentriebe z.B. in Antriebseinheiten mit hohen Antriebsmomenten eingesetzt sind.

### Beschreibung der Zeichnungen

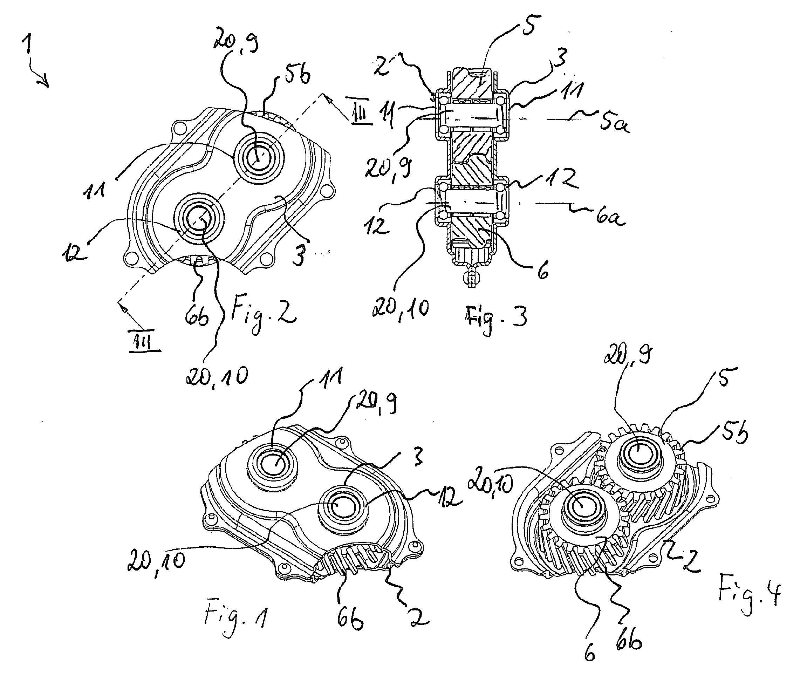

Figuren 1, 2, 3 und 4: Die Figuren 1 bis 4 zeigen eine separat vormontierte Baueinheit 1 aus zwei schalenförmigen Lagerplatten 2 und 3 und mit einem Paar Planetenräder 5 und 6, die miteinander im Zahneingriff stehen und um ihre jeweilige Rotationsachse 5a und 6a drehbar sind. Die Figuren 1 und 2 zeigen verschiedene Ansichten der Baueinheit 1 aus der an einem Ende einzelne Zähne einer Verzahnung 5b des einen Planetenrads 5 und aus dem anderen Ende einzelne Zähne einer Verzahnung 6b hervorstehen. Figur 3 zeigt einen Längsschnitt entlang der Rotationsachsen 5a und 6a nach der Linie III - III aus Figur 1, der zeigt, wie die im Zahneingriff befindlichen Planetenräder 5 und 6 jeweils auf Zapfen 20 in Form von Planetenbolzen 9 und 10 gelagert sind. Die Planetenbolzen 9 und 10 sind im Bild axial links und rechts der Planetenräder jeweils in Aufnahmen 11 bzw. 12 drehbar gelagert. Figur 4 zeigt die einseitig geöffnete Baueinheit 1, bei der die schalenförmigen Lagerplatte 3 entfernt wurde, jedoch die untere Lagerplatte 2 die Planetenräder 5 und 6 noch im Zahneingriff hält.

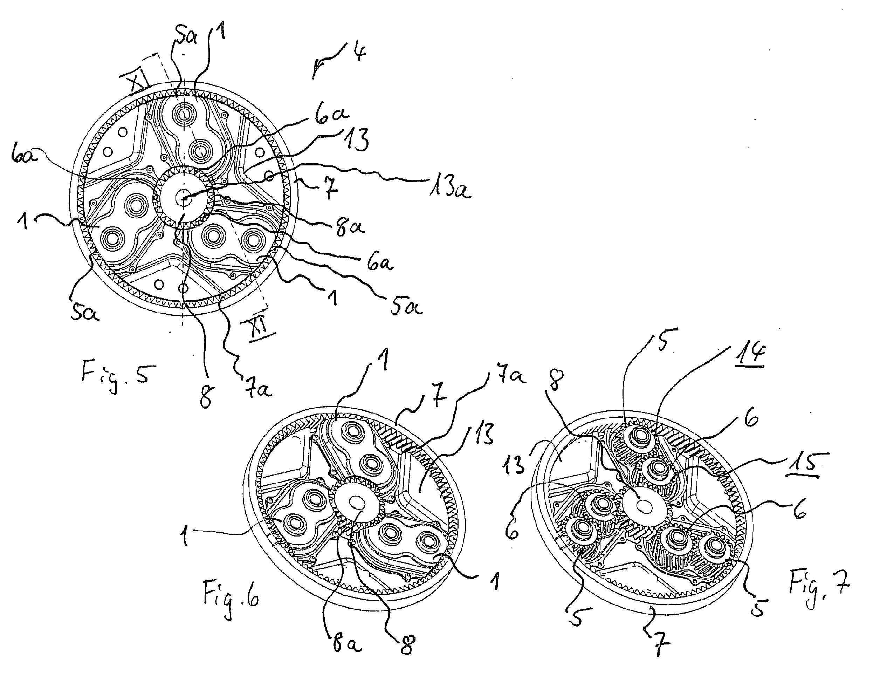

Figuren 5, 6 und 7: Die Figuren 5 bis 7 zeigen einen Planetentrieb 4, der aus einem Hohlrad 7, einem Sonnenrad 8 und aus drei der Baueinheiten 1 nach dem Beispiel aus den Figuren 1 bis 4 gebildet ist. Die Figuren 5 und 6 zeigen den Planetentrieb 4 in verschiedenen Ansichten, aus denen hervorgeht, dass die Baueinheiten 1 gemeinsam so an einem Planetenträger 13 befestigt sind, dass die Verzahnungen 6a der Planetenräder 6 einer jeden Baueinheit 1 mit einer Verzahnung 8a des Sonnenrades 8 sowie die Verzahnungen 5a der Planetenräder 5 einer jeden Baueinheit mit einer Verzahnung 7a des Hohlrades im Zahneingriff stehen. Hohlrad 7 und Planetenträger 13 sind um die in Figur 1 senkrecht ins Bild hineinstoßende Rotationsachse 13a relativ zueinander beweglich, wobei in dieser Darstellung offen gelassen ist, ob eines der Elmente, entweder das Hohlrad 7 oder der Planetenträger 13 auch gegenüber einer Umgebung festgehalten sein kann. Figur 7 zeigt den Planetentrieb 4, in dem von jeder Baueinheit 1 eine Lagerplatte 3 entfernt wurde, so dass erkennbar ist, dass ein erster Satz 14 drei der Planetenräder 5 und ein zweiter Satz 15 drei der Planetenräder 6 aufweist. Jeweils ein Planetenrad 5 bildet mit einem Planetenrad 6 in einer Baueinheit 1 ein miteinander verzahntes Paar.

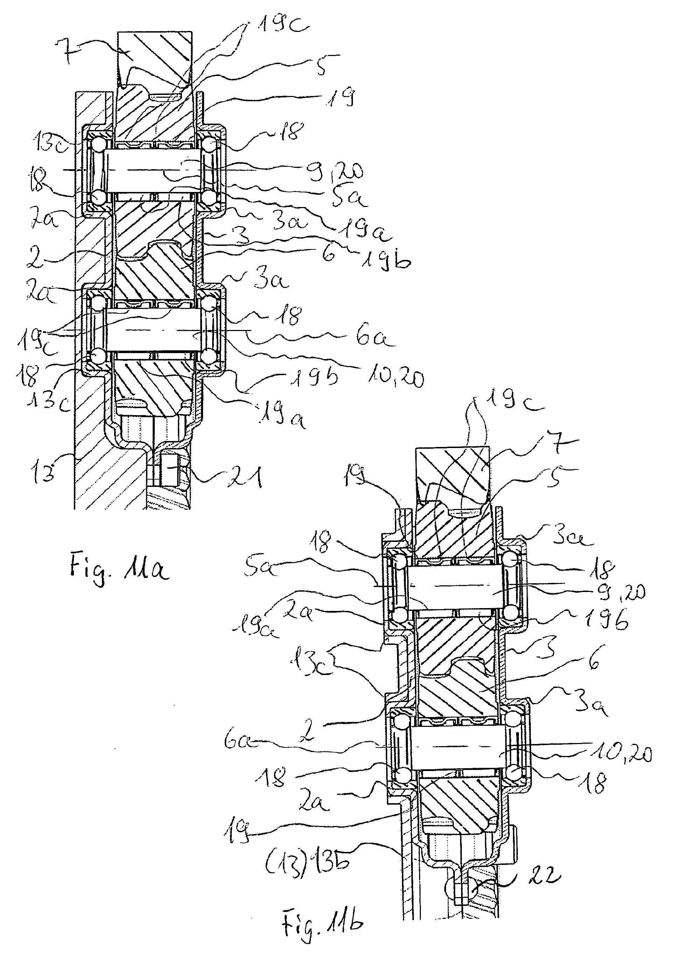

Figuren 11a und 11 b : Die Figuren 11 a und 11 b zeigen mögliche alternative Ausgestaltungen des in den Figuren 5, 6 und 7 dargestellten Planetentriebs 4 in Schnitten entlang der Rotationsachsen 5a und 6a nach der Linie XI - XI aus Figur 5.

Der Planetenträger 13 ist in der mit Figur 11a dargestellten Ausgestaltung der Erfindung einteilig und massiv, beispielsweise aus Stahl oder aus einer Leichtmetalllegierung abgebildet. Der Planetenträger 13 weist zwei zylindrische Aufnahmen 13c auf, in denen jeweils ein Bund 2a der Lagerplatte 2 steckt. Die Lagerplatte 2 ist zumindest umfangsgerichtet um die Rotationsachse 13a des jeweiligen Planetenträgers 13 relativ unbeweglich an dem Planetenträger 13 gehalten, in dem diese mit den Bunden 2a mittels Press- oder Passsitz in den Aufnahmen 13c sitzt und / oder mit Schrauben 21 an den Planetenträger 13 geschraubt ist.

Die Lagerplatte 3 weist die Bunde 3a auf, die den Bunden 2a axial konzentrisch gegenüber liegen. Die die Lagerplatten 2 und 3 sind beispielsweise durch Nieten miteinander verbunden. Der jeweilige Bund 2a oder 3a ist Lagersitz für jeweils ein Wälzlager 18 vom Lagertyp eines Kugellagers. Mittels der Wälzlager 18 sind die Zapfen 20 in Form von Planetenbolzen 9 und 10 drehbar in den Lagerplatten 2 und 3 gelagert. Auf den Planetenbolzen 9 ist mittels jeweils eines Wälzlagers 19 je ein Planetenrad 5 und auf den Planetenbolzen 10 mittels eines Wälzlagers 19 je ein Planetenrad 6 um die Rotationsachsen 5a bzw. 6a relativ zu den Lagerplatten 2 und 3 und zu dem Planetenträger 13 gelagert. Die Wälzlager 19 sind vom Lagertyp Nadellager mit zwei Reihen 19a und 19b Nadeln. Die Nadeln sind in Käfigen 19c geführt.

Der Planetenträger 13 ist in der mit Figur 11b dargestellten Ausgestaltung der Erfindung ein- oder zweiteilig aus Stahlblech abgebildet, wobei nur die im Bild axiale linke Hälfte 13b des Planetenträgers 13 sichtbar ist. Der Planetenträger 13 weist zwei zylindrische Aufnahmen 13c auf, in denen jeweils ein Bund 2a der Lagerplatte 2 steckt. Die Lagerplatte 3 weist die Bunde 3a auf, die den Bunden 2a axial konzentrisch gegenüber liegen. Die die Lagerplatten 2 und 3 sind beispielsweise durch Nieten 22 miteinander verbunden und die Baueinheit 1 ist an den Planetenträger 13 geschraubt. Der jeweilige Bund 2a oder 3a ist Lagersitz für jeweils ein Wälzlager 18 vom Lagertyp eines Kugellagers. Mittels der Wälzlager 18 sind die Zapfen 20 in Form von Planetenbolzen 9 und 10 drehbar in den Lagerplatten 2 und 3 gelagert. Auf den Planetenbolzen 9 ist mittels jeweils eines Wälzlagers 19 je ein Planetenrad 5 und auf den Planetenbolzen 10 mittels eines Wälzlagers 19 je ein Planetenrad 6 um die Rotationsachsen 5a bzw. 6a relativ zu den Lagerplatten 2 und 3 und zu dem Planetenträger 13 gelagert. Die Wälzlager 19 sind vom Lagertyp Nadellager mit zwei Reihen 19a und 19b Nadeln. Die Nadeln sind in Käfigen 19c geführt.

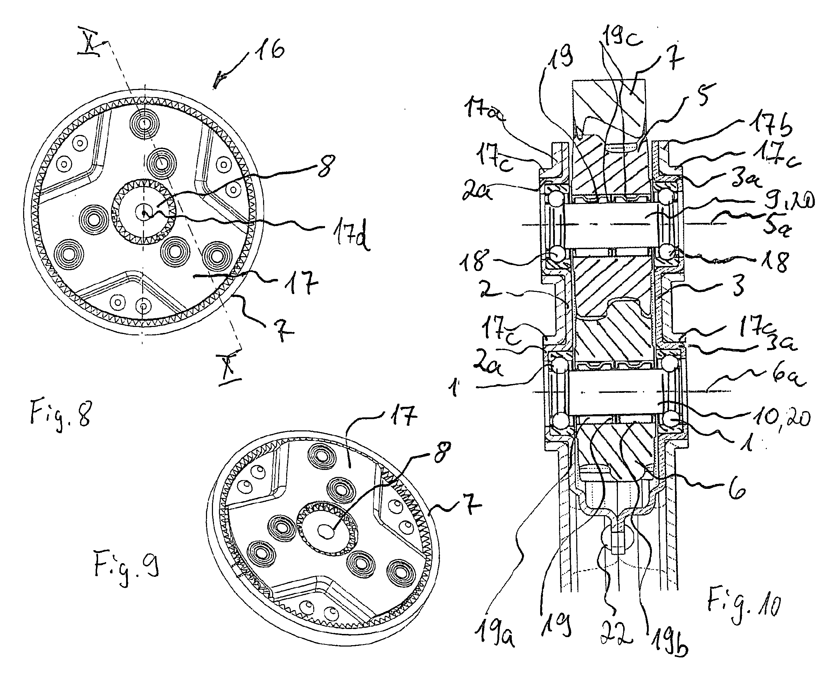

Figuren 8, 9 und 10 Die Figuren 8 bis 10 : zeigen einen Planetentrieb 16, in dem wie in dem Planetentrieb 4 drei der Baueinheiten 1 verbaut sind. Die Figuren 8 und 9 zeigen den Planetentrieb 16 in verschiedenen Ansichten, woraus erkennbar ist, das dieser aus einem Planetenträger 17 einem Hohlrad 7 und aus einem Sonnenrad 8 gebildet ist. Jede der Baueinheiten 1 ist aus zwei Lagerplatten 2 und 3, jeweils einem Planetenrad 5 eines ersten Satzes 14 aus drei Planetenrädern 5, jeweils einem Planetenrad 6 eines zweiten Satzes 15 aus drei Planetenrädern 6 und aus Planetenbolzen 9 und 10 gebildet.

Der Planetenträger 17 ist zweiteilig aus zwei Hälften 17a und 17b gebildet, wie aus Figur 10, einer Darstellung des Planetentriebs 16 im Schnitt entlang der Rotationsachsen 5a und 6a nach der Linie X - X aus Figur 8, hervorgeht. Jede der Hälften 17a und 17b weist zwei zylindrisch ausgebildete Aufnahmen 17c auf, in denen jeweils ein Bund 2a oder 3a einer der Lagerplatten 2 bzw. 3 der axial von den Hälften 17a und 17b eingefassten jeweiligen Baueinheit 1 mit Passsitz oder Presssitz steckt, so dass die Lagerplatten 2 und 3 zumindest umfangsgerichtet um eine Rotationsachse 17d des jeweiligen Planetenträgers 17 relativ unbeweglich an dem Planetenträger 17 gehalten ist.. Der jeweilige Bund 2a oder 3a ist Lagersitz für jeweils ein Wälzlager 18 vom Lagertyp eines Kugellagers. Mittels der Wälzlager 18 sind die Zapfen 20 in Form von Planetenbolzen 9 und 10 drehbar in den Lagerplatten 2 und 3 gelagert. Auf den Planetenbolzen 9 ist mittels jeweils eines Wälzlagers 19 je ein Planetenrad 5 und auf den Planetenbolzen 10 mittels eines Wälzlagers 19 je ein Planetenrad 6 um die Rotationsachsen 5a bzw. 6a relativ zu den Lagerplatten 2 und 3 und zu dem Planetenträger 17 gelagert. Die Wälzlager 19 sind vom Lagertyp Nadellager mit zwei Reihen 19a und 19b Nadeln. Die Nadeln sind in Käfigen 19c geführt.

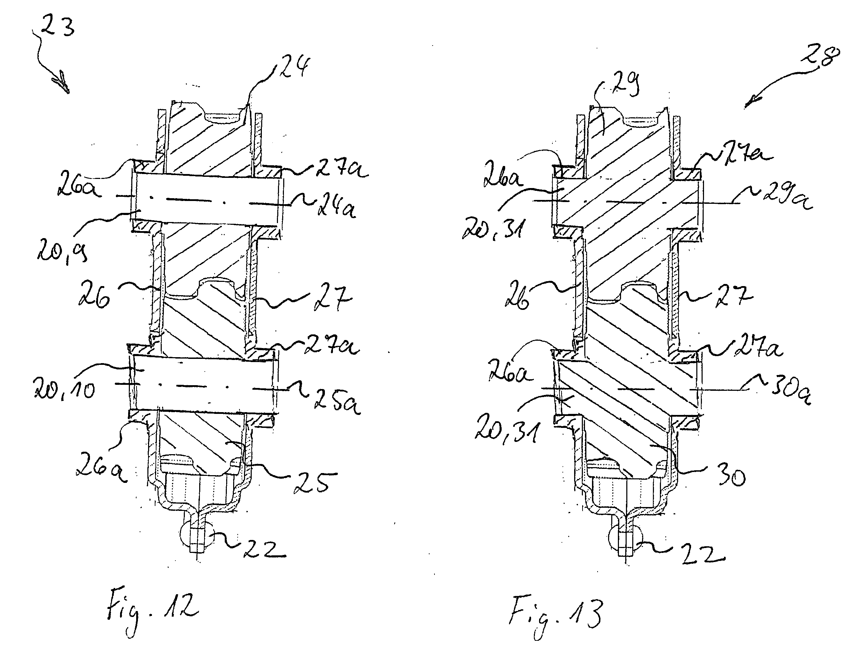

Figuren 12 und 13: Die Figuren 12 und 13 zeigen mögliche alternative Ausgestaltungen einer Baueinheit 23 bzw. 28 in Schnitten entlang der Rotationsachsen 24a und 25a bzw. 29a und 30a.

Die Baueinheit 23 nach Figur 12 ist aus einer Lagerplatte 26 und einer Lagerplatte 27, Planetenbolzen 9 und 10 sowie Planetenrädern 24 und 25 gebildet. Jede der Lagerplatten 26 bzw. 27 weist zwei zylindrische Aufnahmen 26a bzw. 27a auf, in denen jeweils ein Zapfen 20 in Form eines Planetenbolzens 9 bzw. eines Planetenbolzens 10 drehbar gleitgelagert ist. Die die Lagerplatten 26 und 27 sind durch Niete 22 miteinander verbunden. Auf den Planetenbolzen 9 ist je ein Planetenrad 24 und auf den Planetenbolzen 10 je ein Planetenrad 25 um die Rotationsachsen 24a bzw. 25a relativ drehbar zu den Lagerplatten 26 und 27 gelagert.

Die Baueinheit 28 nach Figur 13 ist aus einer Lagerplatte 26 und einer Lagerplatte 27, Wellenzapfen 31 und Planetenrädern 29 und 30 gebildet. Jede der Lagerplatten 26 bzw. 27 weist zwei zylindrische Aufnahmen 26a bzw. 27a auf, in denen jeweils ein Zapfen 20 in Form eines Wellenzapfens 31 drehbar gleitgelagert ist. Die die Lagerplatten 26 und 27 sind durch Niete 22 miteinander verbunden. Planetenräder 29 bzw. 30 weisen jeweils im Bild axial links und rechts je einen der Wellenzapfen 31 auf, welche einteilig mit den Planetenrädern 29 bzw. 30 ausgebildet sind.

### Bezugszeichen

| | | | |
|---|---|---|---|
| 1 | Baueinheit | 16 | Planetentrieb |
| 2 | Lagerplatte | 17 | Planetenträger |
| 2a | Bund | 17a | Hälfte |
| 3 | Lagerplatte | 17b | Hälfte |
| 3a | Bund | 17c | Aufnahme |
| 4 | Planetentrieb | 17d | Rotationsachse |
| 5 | Planetenrad | 18 | Wälzlager |
| 5a | Rotationsachse | 19 | Wälzlager |
| 5b | Verzahnung | 19a | Reihe Nadeln |
| 6 | Planetenrad | 19b | Reihe Nadeln |
| 6a | Rotationsachse | 19c | Käfig |
| 6b | Verzahnung | 20 | Zapfen |
| 7 | Hohlrad | 21 | Schraube |
| 7a | Verzahnung | 22 | Niet |
| 8 | Sonnenrad | 23 | Baueinheit |
| 8a | Planetenbolzen | 24 | Planetenrad |
| 9 | Planetenbolzen | 24a | Rotationsachse |
| 10 | Planetenbolzen | 25 | Planetenrad |
| 11 | Aufnahme | 25a | Rotationsachse |
| 12 | Aufnahme | 26 | Lagerplatte |
| 13 | Planetenträger | 27 | Lagerplatte |
| 13a | Rotationsachse | 28 | Baueinheit |
| 13b | Hälfte | 29 | Planetenrad |
| 13c | Aufnahme | 29a | Rotationsachse |
| 14 | erster Satz | 30 | Planetenrad |
| 15 | zweiter Satz | 30a | Rotationsachse |
| | | 31 | Wellenzapfen |

## Patentansprüche

1. Planetentrieb (4, 16) wenigstens mit einem ersten Satz (14) Planetenräder (5), mit einem zweiten Satz (15) Planetenräder (6), mit mindestens einem für beide Planetensätze (14, 15) gemeinsamen Planetenträger (13, 17) und mit einem Hohlrad (7), wobei *jedes Planetenrad (5) des ersten Satzes (14) mit einem Planetenrad (6) des zweiten Satzes (15) ein miteinander im Zahneingriff stehendes Paar bildet, und wobei die Planetenräder (5, 6) jedes Paares separat zu dem Planetenträger (13, 17) axial zwischen zwei zum Planetenträger (13, 17) separaten Lagerplatten (2, 3) um die jeweilige eigene Rotationsachse (5a, 6a) drehbar gelagert und im Zahneingriff zueinander angeordnet sind, **dadurch gekennzeichnet, dass** die Planetenräder* (5, 6) *mindestens eines der Paare* relativ zu dem Planetenträger (13, 17) jeweils um eine axial ausgerichtete Rotationsachse (5a, 6a) drehbar und miteinander im Zahneingriff stehend *mit Zapfen (20) in den Lagerplatten (2, 3, 26*, *27) drehbar gelagert und dabei* an *den* Lagerplatten (2, 3) gehalten *sind*, wobei *wenigstens eine der* Lagerplatte*n* (2, 3), *an denen das Paar gehalten ist,* zumindest umfangsgerichtet um eine Rotationsachse (13a, 17d) des jeweiligen Planetenträgers (13, 17) relativ unbeweglich *zum Planetenträger (13, 17)* an dem Planetenträger (13, 17) *befestigt ist.*

2. Planetentrieb nach Anspruch 1, **dadurch gekennzeichnet, dass** wobei jedes der Paare jeweils *zwischen zwei Lagerplatten* (2, 3) *an den* Lagerplatte*n* (2, 3) gehalten ist.

3. Planetentrieb nach Anspruch 1, **dadurch gekennzeichnet, dass** die *Lagerplatten miteinander verbunden sind.*

4. Planetentrieb nach Anspruch 1, **dadurch gekennzeichnet, dass** die Planetenräder (5, 6) *jeden* Paares separat zu dem Planetenträger (13, 17) axial zwischen zwei *zum Planetenträger (13, 17) separaten* der Lagerplatten (2, 3) um die jeweilige eigene Rotationsachse (5a, 6a) drehbar gelagert und im Zahneingriff zueinander *an jeder der zwei Lagerplatten (2, 3)* gehalten *sind und dass beide Lagerplatten (2, 3) an dem Planetenträger (13, 17) befestigt sind.*

5. Planetentrieb nach Anspruch 4, **dadurch gekennzeichnet, dass** wenigstens eine der Lagerplatten (2, 3) schalenförmig gestaltet und mit der anderen Lagerplatte (2, 3) zu einem Gehäuse verbunden ist und das Paar Planetenräder (5, 6) so einschließt, dass zumindest ein Teil einer Verzahnung (5b) des ersten Planetenrades (5) und ein Teil einer Verzahnung (6b) des zweiten Planetenrades (6) von außen frei zugänglich sind.

6. Planetentrieb nach Anspruch 5, **dadurch gekennzeichnet, dass** beide Lagerplatten (2, 3) schalenförmig ausgebildet und miteinander verbunden sind.

7. Baueinheit (1) für einen Planetentrieb (4, 16) nach Anspruch 1, *gebildet aus* wenigstens zwei Lagerplatte*n* (2, 3) und einem Paar im Zahneingriff stehender Planetenräder (5, 6, 24, 25, 29, 30), wobei die Planetenräder (5, 6, 24, 25, 29, 30) *zwischen den Lagerplatten (2, 3) angeordnet und* mit Zapfen (20) in *den* Lagerplatten *(2, 3, 26, 27)* drehbar gelagert sind, *und wobei die Baueinheit (1) separat zum Planetenträger (13, 17) vormontiert ist.*

8. Baueinheit 1 nach Anspruch 7, **dadurch gekennzeichnet, dass** die Zapfen (20) an dem jeweiligen Planetenrad (29, 30) ausgebildete und axial abstehende Wellenzapfen (21) sind.

9. Baueinheit nach Anspruch 7, **dadurch gekennzeichnet , dass** die Zapfen (20) Planetenbolzen (9, 10) sind, auf denen jeweils mindestens ein Planetenrad (5, 6, 24, 25) eines Paares drehbar gelagert ist.

## Claims

1. Planetary drive (4, 16) at least having a first set (14) of planetary gears (5), having a second set (15) of planetary gears (6), having at least one planetary carrier (13, 17) which is common to both planetary sets (14, 15), and having an internal gear (7), each planetary gear (5) of the first set (14) forming, with a planetary gear (6) of the second set (15), a pair which is in tooth engagement with one another, and the planetary gears (5, 6) of each pair being mounted such that they can be rotated separately from the planetary carrier (13, 17) about the respective dedicated rotational axis (5a, 6a) axially between two bearing plates (2, 3) which are separate from the planetary carrier (13, 17), and being arranged in tooth engagement with one another, **characterized in that** the planetary gears (5, 6) of at least one of the pairs are mounted such that they can be rotated relative to the planetary carrier (13, 17) in each case about an axially oriented rotational axis (5a, 6a) and, in tooth engagement with one another, such that they can be rotated in the bearing plates (2, 3, 26, 27) by way of pins (20), and are held here on the bearing plates (2, 3), at least one of the bearing plates (2, 3), on which the pair is held, being fastened to the planetary carrier (13, 17) such that it is at least circumferentially directed about a rotational axis (13a, 17d) of the respective planetary carrier (13, 17) and such that it cannot be moved relative to the planetary carrier (13, 17).

2. Planetary drive according to Claim 1, **characterized in that** each of the pairs is held on the bearing plates (2, 3) in each case between two bearing plates (2, 3).

3. Planetary drive according to Claim 1, **characterized in that** the bearing plates are connected to one another.

4. Planetary drive according to Claim 1, **characterized in that** the planetary gears (5, 6) of each pair are mounted separately to the planetary carrier (13, 17) such that they can be rotated about the respective dedicated rotational axis (5a, 6a) axially between two of the bearing plates (2, 3) which are separate from the planetary carrier (13, 17), and are held in tooth engagement with one another on each of the two bearing plates (2, 3), and **in that** both bearing plates (2, 3) are fastened to the planetary carrier (13, 17).

5. Planetary drive according to Claim 4, **characterized in that** at least one of the bearing plates (2, 3) is of shell-shaped design and is connected to the other bearing plate (2, 3) to form a housing and encloses the pair of planetary gears (5, 6) in such a way that at least one part of a toothing system (5b) of the first planetary gear (5) and one part of a toothing system (6b) of the second planetary gear (6) are freely accessible from the outside.

6. Planetary drive according to Claim 5, **characterized in that** both bearing plates (2, 3) are of shell-shaped configuration and are connected to one another.

7. Structural unit (1) for a planetary drive (4, 16) according to Claim 1, formed from at least two bearing plates (2, 3) and a pair of planetary gears (5, 6, 24, 25, 29, 30) which are in tooth engagement, the planetary gears (5, 6, 24, 25, 29, 30) being arranged between the bearing plates (2, 3) and being mounted rotatably in the bearing plates (2, 3, 26, 27) by way of pins (20), and the structural unit (1) being preassembled separately from the planetary carrier (13, 17).

8. Structural unit (1) according to Claim 7, **characterized in that** the pins (20) are shaft journals (21) which are formed on the respective planetary gear (29, 30) and project axially.

9. Structural unit according to Claim 7, **characterized in that** the pins (20) are planet journals (9, 10), on which in each case at least one planetary gear (5, 6, 24, 25) of a pair is mounted rotatably.

## Revendications

1. Train épicycloïdal (4, 16) comprenant au moins un premier train (14) de satellites (5), un deuxième train (15) de satellites (6), au moins un porte-satellites (13, 17) commun aux deux trains planétaires (14, 15) et une couronne dentée (7), chaque satellite (5) du premier train (14) formant avec un satellite (6) du deuxième train (15) une paire en engagement denté mutuel, et les satellites (5, 6) de chaque paire étant montés séparément des porte-satellites (13, 17) axialement entre deux plateaux de palier (2, 3) séparés du porte-satellites (13, 17) de manière à pouvoir tourner autour de l'axe de rotation respectif propre (5a, 6a) et étant disposés en engagement denté les uns avec les autres, **caractérisé en ce que** les satellites (5, 6) d'au moins une des paires sont montés par rapport au porte-satellites (13, 17) à chaque fois de manière à pouvoir tourner autour d'un axe de rotation orienté axialement (5a, 6a) et en engagement denté mutuel de manière à pouvoir tourner avec des tourillons (20) dans les plateaux de palier (2, 3, 26, 27) et étant maintenus en l'occurrence sur les plateaux de palier (2, 3), au moins l'un des plateaux de palier (2, 3) sur lesquels est maintenue la paire étant fixé sur le porte-satellites (13, 17) au moins de manière orientée circonférentiellement autour d'un axe de rotation (13a, 17d) du porte-satellites respectif (13, 17) de manière relativement immobile par rapport au porte-satellites (13, 17).

2. Train épicycloïclal selon la revendication 1, **caractérisé en ce que** chacune des paires est à chaque fois maintenue entre deux plateaux de palier (2, 3) sur les plateaux de palier (2, 3).

3. Train épicycloïdal selon la revendication 1, **caractérisé en ce que** les plateaux de palier sont reliés l'un à l'autre.

4. Train épicycloïdal selon la revendication 1, **caractérisé en ce que** les satellites (5, 6) de chaque paire sont montés séparément du porte-satellites (13, 17) axialement entre deux des plateaux de palier (2, 3) séparés du porte-satellites (13, 17) de manière à pouvoir tourner autour de l'axe de rotation respectif propre (5a, 6a) et sont maintenus en engagement denté les uns avec les autres au niveau de chacun des deux plateaux de palier (2, 3) et **en ce que** les deux plateaux de palier (2, 3) sont fixés sur le porte-satellites (13, 17).

5. Train épicycloïdal selon la revendication 4, **caractérisé en ce qu'**au moins l'un des plateaux de palier (2, 3) est configuré en forme de coque et est relié à l'autre plateau de palier (2, 3) pour former un boîtier et renferme la paire de satellites (5, 6) de telle sorte qu'au moins une partie d'une denture (5b) du premier satellite (5) et une partie d'une denture (6b) du deuxième satellite (6) soient librement accessibles depuis l'extérieur.

6. Train épicycloïdal selon la revendication 5, **caractérisé en ce que** les deux plateaux de palier (2, 3) sont réalisés en forme de coque et sont reliés l'un à l'autre.

7. Unité structurelle (1) pour un train épicycloïdal (4, 16) selon la revendication 1, formée d'au moins deux plateaux de palier (2, 3) et d'une paire de satellites (5, 6, 24, 25, 29, 30) en engagement denté, les satellites (5, 6, 24, 25, 29, 30) étant disposés entre les plateaux de palier (2, 3) et étant montés de manière à pouvoir tourner avec des tourillons (20) dans les plateaux de palier (2, 3, 26, 27), et l'unité structurelle (1) étant prémontée séparément du porte-satellites (13, 17).

8. unité structurelle (1) selon la revendication 7, **caractérisée en ce que** les tourillons (20) sont des tourillons d'arbre (21) réalisés sur le satellite respectif (29, 30) et saillant axialement.

9. Unité structurelle (1) selon la revendication 7, **caractérisée en ce que** les tourillons (20) sont des axes de satellite (9, 10) sur lesquels est à chaque fois monté à rotation au moins un satellite (5, 6, 24, 25) d'une paire.
